# EUROPEAN PATENT APPLICATION

(11) **EP 4 811 927 A1**
(43) Date of publication of application: **23.09.2026**
(21) Application number: 26164765.5
(22) Date of filing: 13.03.2026
(51) Int. Cl.: H04W 76/28, H04W 72/12, H04W 72/1263

(54) **METHOD, DEVICE, APPARATUS, AND COMPUTER READABLE STORAGE MEDIUM FOR COMMUNICATION**

(30) Priority: 18.03.2025 CN 202510328548
(71) Applicant: Nokia Solutions and Networks Oy, 02610 Espoo (FI)
(72) Inventor: HUANG, Kai Kai, Shanghai (CN); CHENG, Gang, Shanghai (CN); JIANG, Yi Ming, Shanghai (CN)
(74) Representative: Nokia EPO representatives

(57) **Abstract**

The example embodiments of the present disclosure relate to a device, method, apparatus and computer-readable storage medium for communication. A method for communication comprises: generating unavailability information by a first device, wherein the unavailability information comprises at least an indication that the first device is unavailable for communication on a predetermined frequency band during a predetermined time period, an identifier of the first device, and a reason associated with the unavailability information; and sending the unavailability information to a second device in a predetermined frame structure.

## Description

### TECHNICAL FIELD

The example embodiments of the present disclosure relate to communication technology, and more particularly to a method, device, apparatus and computer-readable storage medium for network device.

### BACKGROUND

Wireless channels are fundamental to system design, network optimisation and performance evaluation. In some cases, such as off-channel scanning, peer-to-peer networks (Peer-to-Peer, P2P), licensed-assisted access (Licensed-Assisted Access, LAA) and 5G New Radio in unlicensed spectrum (5G NR-U), wireless channels may be occupied.

### SUMMARY

In a first aspect of the present disclosure, a method for communication is provided. The method comprises: generating unavailability information by a first device, wherein the unavailability information comprises at least an indication that the first device is unavailable for communication on a predetermined frequency band during a predetermined time period, an identifier of the first device, and a reason associated with the unavailability information; and sending the unavailability information to a second device in a predetermined frame structure.

In a second aspect of the present disclosure, a method for communication is provided. The method comprises: receiving unavailability information of a first device from the first device in a predetermined frame structure by a second device, wherein the unavailability information comprises at least an indication that the first device is unavailable for communication on a predetermined frequency band during a predetermined time period, an identifier of the first device, and a reason associated with the unavailability information; and sending the unavailability information to at least one third device in response to receiving the unavailability information from the first device.

In a third aspect of the present disclosure, a method for communication is provided. The method comprises: receiving unavailability information of a first device from a second device in a predetermined frame structure by a third device, wherein the unavailability information comprises at least an indication that the first device is unavailable for communication on a predetermined frequency band during a predetermined time period, an identifier of the first device, and a reason associated with the unavailability information; and performing channel transmission with the first device outside the predetermined time period based on the unavailability information.

In a fourth aspect of the present disclosure, a device for communication is provided. The device comprises: at least one processor; and at least one memory coupled to the at least one processor, the at least one memory having stored therein instructions configured to cause the device, when executed by the at least one processor, to generate unavailability information by the first device, wherein the unavailability information comprises at least an indication that the first device is unavailable for communication on a predetermined frequency band during a predetermined time period, an identifier of the first device, and a reason associated with the unavailability information; and send the unavailability information to the second device in a predetermined frame structure.

In a fifth aspect of the present disclosure, a device for communication is provided. The device comprises: at least one processor; and at least one memory coupled to the at least one processor, the at least one memory having stored therein instructions configured to cause the device, when executed by the at least one processor, to receive unavailability information of the first device from the first device in a predetermined frame structure, wherein the unavailability information comprises at least an indication that the first device is unavailable for communication on a predetermined frequency band during a predetermined time period, an identifier of the first device, and a reason associated with the unavailability information; and send the unavailability information to the at least one third device in response to receiving the unavailability information from the first device.

In a sixth aspect of the present disclosure, a device for communication is provided. The device comprises: at least one processor; and at least one memory coupled to the at least one processor, the at least one memory having stored therein instructions configured to cause the device, when executed by the at least one processor, to receive unavailability information of the first device from the second device in a predetermined frame structure, wherein the unavailability information comprises at least an indication that the first device is unavailable for communication on a predetermined frequency band during a predetermined time period, an identifier of the first device, and a reason associated with the unavailability information; and perform channel transmission with the first device outside the predetermined time period based on the unavailability information.

In a seventh aspect of the present disclosure, an apparatus for communication is provided. The apparatus comprises: means for generating unavailability information by the first device, wherein the unavailability information comprises at least an indication that the first device is unavailable for communication on a predetermined frequency band during a predetermined time period, an identifier of the first device, and a reason associated with the unavailability information; and means for sending the unavailability information to the second device in a predetermined frame structure.

In an eighth aspect of the present disclosure, an apparatus for communication is provided. The apparatus comprises: means for receiving unavailability information of the first device from the first device in a predetermined frame structure, wherein the unavailability information comprises at least an indication that the first device is unavailable for communication on a predetermined frequency band during a predetermined time period, an identifier of the first device, and a reason associated with the unavailability information; and means for sending the unavailability information to the at least one third device in response to receiving the unavailability information from the first device.

In a ninth aspect of the present disclosure, an apparatus for communication is provided. The apparatus comprises: means for receiving unavailability information of the first device from the second device in a predetermined frame structure, wherein the unavailability information comprises at least an indication that the first device is unavailable for communication on a predetermined frequency band during a predetermined time period, an identifier of the first device, and a reason associated with the unavailability information; and means for performing channel transmission with the first device outside the predetermined time period based on the unavailability information.

In a tenth aspect of the present disclosure, a computer-readable storage medium is provided. The computer-readable storage medium has stored thereon a computer program comprising instructions which, when executed by a processor of an apparatus, cause the apparatus to perform any one of the methods according to the first aspect, second aspect or third aspect.

It should be understood that the content described in the summary of the invention is not intended to define key or essential features of the embodiments of the present disclosure, nor to limit the scope of the present disclosure. Other features will become apparent from the following description.

### BRIEF DESCRIPTION OF THE DRAWINGS

The example embodiments of the present disclosure are illustrated by way of example and further explained in detail with reference to the drawings, wherein:
FIG. 1 shows a schematic diagram of an environment in which the example embodiments described herein may be implemented;
FIG. 2 shows a schematic diagram of overlapping basic service set issues;
FIG. 3 shows a schematic diagram of a communication process according to some example embodiments of the present disclosure;
FIGS. 4A to 4G show schematic diagrams of frame formats according to some example embodiments of the present disclosure;
FIG. 5 shows a schematic diagram of a communication process according to some example embodiments of the present disclosure;
FIG. 6 shows a schematic diagram of a frame format according to some example embodiments of the present disclosure;
FIGS. 7A to 7B show schematic diagrams of communication processes according to some example embodiments of the present disclosure;
FIGS. 8A to 8D show schematic diagrams of frame formats according to some example embodiments of the present disclosure;
FIG. 9 shows a flowchart of a communication method according to some example embodiments of the present disclosure;
FIG. 10 shows a flowchart of a communication method according to some example embodiments of the present disclosure;
FIG. 11 shows a flowchart of a communication method according to some example embodiments of the present disclosure;
FIG. 12 shows a simplified block diagram of a device suitable for implementing the example embodiments of the present disclosure; and
FIG. 13 shows a schematic diagram of a computer-readable medium according to some example embodiments of the present disclosure.

In all drawings, identical or similar reference signs denote identical or similar elements.

### DETAILED DESCRIPTION OF SOME SPECIFIC EMBODIMENTS

The following describes the principles and exemplary implementations of the present disclosure with reference to several illustrative examples. It should be understood that these specific examples are described only for enabling those skilled in the art to better understand and implement the present disclosure, and not to limit the scope of the present disclosure in any way.

As used herein, the term "comprising" and similar terms shall be understood as openended inclusion, i.e., "comprising but not limited to". The term "based on" shall be understood as "at least partially based on". The term "an embodiment" or "the embodiment" shall be understood as "at least one embodiment". Terms such as "first", "second", etc. may refer to different or identical objects. Other explicit and implicit definitions may be included below.

As used herein, the term "determining" encompasses various actions. For example, "determining" may include operations, calculations, processing, derivation, investigation, searching (e.g., in tables, databases or other data structures), identification, etc. Additionally, "determining" may include receiving (e.g., receiving information), accessing (e.g., accessing data in memory), etc. Furthermore, "determining" may include parsing, selecting, choosing, establishing, etc.

In this disclosure, unless explicitly stated otherwise, "responding to A" performing a step does not mean that the step is performed immediately after "A", but may include one or more intermediate steps.

The term "circuitry" as used herein refers to any of the following:(a) solely hardware circuit implementations (e.g., only analog and/or digital circuits); and (b) combinations of hardware circuits and software, such as (if applicable): (i) combinations of analog and/or digital hardware circuits with software/firmware; or (ii) any portion of a hardware processor with software (including digital signal processors, software and memory working together to cause devices such as optical communication devices or other computing devices to perform various functions); and (c) hardware circuits and/or processors, such as microprocessors or portions thereof, which require software (e.g., firmware) for operation but may operate without software when not required.

The definition of circuitry applies to all uses of this term in the present disclosure (including any claims). As another example, the term "circuitry" herein also covers implementations consisting solely of hardware circuits or processors (or multiple processors), portions thereof, or their associated software or firmware. For instance, if applicable to a specific claim element, the term "circuitry" also covers baseband integrated circuits or processor integrated circuits or similar integrated circuits in optical line terminals or other computing devices.

As used herein, the term "communication network" refers to networks conforming to any suitable communication standards, such as New Radio (NR), Long Term Evolution (LTE), LTE-Advanced (LTE-A), Wideband Code Division Multiple Access (WCDMA), High Speed Packet Access (HSPA), Narrow Band Internet of Things (NB-IoT), etc. Additionally, communications between terminal devices and network devices in communication networks may be performed according to any suitable generation communication protocols, including but not limited to first generation (1G), second generation (2G), 2.5G, 2.75G, third generation (3G), fourth generation (4G), 4.5G, fifth generation (5G), sixth generation (6G) communication protocols and/or any other currently known or future-developed protocols. The example embodiments of the present disclosure may be applied to various communication systems including but not limited to terrestrial communication systems, non-terrestrial communication systems or combinations thereof. Given the rapid development in the communications field, future types of communication technologies and systems may also be used to implement the present disclosure. This shall not be considered as limiting the scope of the present disclosure to only the aforementioned systems.

As used herein, the term "network device" refers to a node in a communication network through which terminal devices access the network and receive services from it. Depending on the terminology and technology applied, network devices may refer to base stations (BS) or access points (AP), such as NodeB (NodeB or NB), evolved NodeB (eNodeB or eNB), NR NB (also known as gNB), remote radio units (RRU), radio heads (RH), remote radio heads (RRH), relays, integrated access and backhaul (IAB) nodes, low-power nodes such as femto or pico cells, etc.

As used herein, the term "terminal device" refers to any terminal device capable of wireless communication. By way of example and not limitation, terminal devices may also be referred to as network devices, user equipment (UE), subscriber stations (SS), portable subscriber stations, mobile stations (MS) or access terminals (AT). Terminal devices may include but are not limited to mobile phones, cellular phones, smartphones, VoIP phones, wireless local loop phones, tablet computers, wearable terminal devices, personal digital assistants (PDAs), portable computers, desktop computers, image capture terminal devices such as digital cameras, gaming terminal devices, music storage and playback devices, vehicle-mounted wireless terminal devices, wireless endpoints, mobile stations, laptop embedded devices (LEE), laptop mounted devices (LME), USB encryption dongles, smart devices, wireless customer premises equipment (CPE), Internet of Things (IoT) devices, watches or other wearable devices, head-mounted displays (HMDs), vehicles, drones, medical devices and applications (e.g., remote surgery), industrial devices and applications (e.g., robots and/or other wireless devices operating in industrial and/or automated process chains), consumer electronic devices, devices operating on commercial and/or industrial wireless networks, etc. Terminal devices may correspond to the mobile terminal (MT) part of an IAB node (e.g., relay nodes). In the following description, terms "terminal device", "network device", "terminal", "user equipment" and "UE" may be used interchangeably.

As used herein, the term "circuit" refers to any of the following:(a) solely hardware circuit implementations (e.g., only analog and/or digital circuits); and (b) combinations of hardware circuits and software, such as (if applicable): (i) combinations of analog and/or digital hardware circuits with software/firmware; or (ii) any portion of a hardware processor with software (including digital signal processors, software and memory working together to cause devices such as optical line terminals or other computing devices to perform various functions); and (c) hardware circuits and/or processors, such as microprocessors or portions thereof, which require software (e.g., firmware) for operation but may operate without software when not required.

The definition of circuit applies to all uses of this term in the present disclosure (including any claims). As another example, the term "circuit" herein also covers implementations consisting solely of hardware circuits or processors (or multiple processors), portions thereof, or their associated software or firmware. For instance, if applicable to a specific claim element, the term "circuit" also covers baseband integrated circuits or processor integrated circuits or similar integrated circuits in optical line terminals or other computing devices.

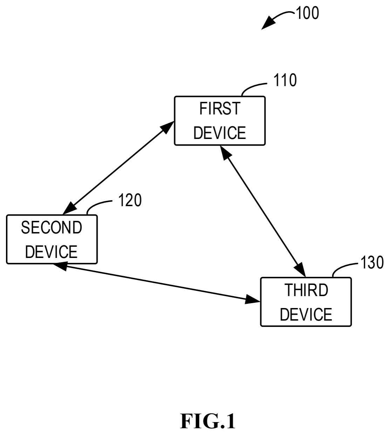

FIG. 1 shows a schematic diagram of an example communication network 100 in which the example embodiments described herein may be implemented. Communication network 100 may form part of a communication network. In communication network 100, first device 110, second device 120 and third device 130 are included. Second device 120 and third device 130 may communicate with first device 110, and second device 120 may communicate with third device 130.

In some example embodiments, first device 110 may be any access station (station, STA) or access terminal capable of accessing wireless network coverage provided by second device 120 or third device 130.

In some example embodiments, second device 120 or third device 130 may include a wireless router configured to provide wireless network coverage for indoor environments. The wireless router may be a network device conforming to the IEEE 802.11 series standards or implemented by any appropriate device, such as Wi-Fi access points (AP). Second device 120 or third device 130 may communicate with other network devices (e.g., base stations) to provide wireless network coverage for specific ranges of terminal devices; the scope of the present disclosure is not limited in this regard.

In some other example embodiments, first device 110 may be an AP while second device 120 or third device 130 may be a STA. In some additional example embodiments, first device 110, second device 120 and third device 130 may all be STAs.

In some implementations, APs and STAs may be multi-link operation (Multi-link operation, MLO) supporting devices. Such devices are also referred to as multi-link devices (Multi-link Device, MLD). That is, communication between the above-mentioned APs and STAs may utilize multiple communication links. In this case, second device 120 or third device 130 may be an AP MLD while first device 110 may be a non-AP MLD (Non-AP MLD). Alternatively, second device 120 or third device 130 may be a Non-AP MLD while first device 110 may be an AP MLD.

In some other implementations, first device 110, second device 120 and third device 130 may all be AP MLDs or all be Non-AP MLDs.

In some example embodiments, when first device 110 is a STA and second device 120 or third device 130 is an AP, the link from first device 110 to second device 120 or third device 130 may be referred to as uplink (UL), while the link from second device 120 or third device 130 to first device 110 may be referred to as downlink (DL). In DL, second device 120 or third device 130 is a transmitting (TX) device (or transmitter), and first device 110 is a receiving (RX) device (or receiver). In UL, first device 110 is a TX device (or transmitter), and second device 120 or third device 130 is an RX device (or receiver).

It should be understood that the number of devices and connections shown in FIG. 1 are merely illustrative and not limiting. Communication network 100 may include any suitable number of devices configured to implement the example embodiments of the present disclosure. Although not shown, it should be understood that one or more other devices may be deployed in communication network 100.

Communications in communication network 100 may be performed according to any appropriate communication protocol(s). Examples of communication protocols include but are not limited to first generation (1G), second generation (2G), 2.5G, 2.75G, third generation (3G), fourth generation (4G), 4.5G, fifth generation (5G), sixth generation (6G) cellular communication protocols, wireless local area network communication protocols such as IEEE 802.11, and/or any other currently known or future-developed protocols.

Additionally, communications may utilise any appropriate wireless communication technology including but not limited to code division multiple access (CDMA), frequency division multiple access (FDMA), time division multiple access (TDMA), frequency division duplexing (FDD), time division duplexing (TDD), multiple input multiple output (MIMO), orthogonal frequency division multiplexing (OFDM), discrete Fourier transform-spread OFDM (DFT-s-OFDM), and/or any other currently known or future-developed technology.

In some discussed schemes, low latency and reliability are new features where many schemes focus on in-device coexistence (In-Device Coexistence, IDC) scenarios for unavailability reporting. In-device coexistence situations may include Wi-Fi and Bluetooth coexistence.

In some discussed schemes, radio/channel measurements (e.g., off-channel scanning, peer-to-peer networks, licensed-assisted access and 5G NR-U in unlicensed spectrum) cause wireless channels to be unavailable, leading to packet loss or reduced network transmission rates.

However, some discussed schemes lack mechanisms for instantaneously notifying various devices participating in communication processes about unavailability. Additionally, some discussed schemes do not provide mechanisms for sharing unavailability information across multi-access point groups (multi-AP group).

In off-channel scanning scenarios, if an access point obtains a transmission opportunity (Transmission opportunity, TXOP) and begins sending packets to stations, but the station has already started off-channel scanning before the TXOP starts, the access point will continue attempting to send packets until reaching maximum retry attempts. This issue also occurs when stations send packets to access points, which may be referred to as unavailability problems.

In some cases, there are additional capabilities for listening to new off-channels during off-channel scanning. This capability should be transmitted as part of unavailability information with an unavailability profile as signalling. In some cases, multiple reasons for unavailability exist; therefore, the reason for unavailability must be included in the unavailability information so that other peer entities or multi-nodes can make appropriate decisions based on the unavailability of peer entities or nodes.

In some examples, if an access point knows that a related station is transmitting Bluetooth signals, the access point may not use 2.4 GHz. If an access point knows that other access points are performing measurements, the access point may continue sending packets or send measurement-required frames to ensure measurement quality for peer entities or nodes.

When in-device coexistence occurs, overlapping basic service sets (Overlapping Basic Service Set, OBSS) affect multi-access point groups. For example, Bluetooth signals and 2.4 GHz Wi-Fi signals cause signal conflicts across different basic service sets (Basic Service Set, BSS).

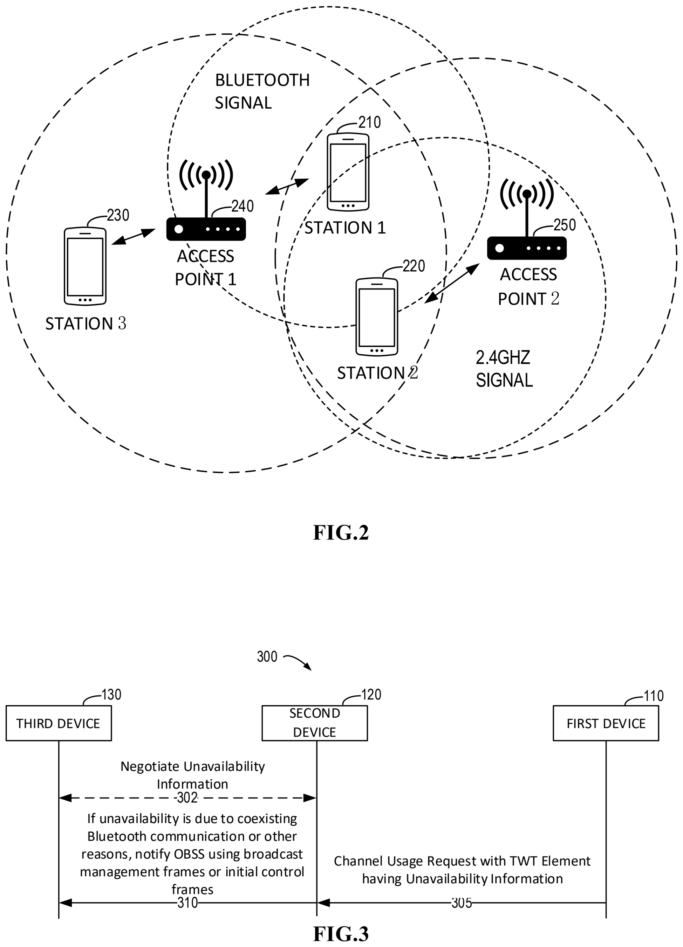

FIG. 2 shows a schematic diagram of multi-access point basic service set overlapping issues.

As shown in FIG. 2, two BSSs (access point 1 240 and access point 2 250) have a multi-AP relationship for unavailability sharing capability with overlapping signals. If station 1 210 notifies access point 1 240 of its unavailability information due to Bluetooth coexistence, indicating that station 1 210 will be unavailable for 1 millisecond, but access point 2 250 does not receive this unavailability information, access point 2 250 continues sending 2.4G traffic to its associated stations.

In the above situation, because access point 2 250 is near station 1 210 and they interfere during the 1 millisecond period, 2.4G traffic from access point 2 250 is affected by Bluetooth signals transmitted by station 1 210, causing signal conflicts between Bluetooth and 2.4G signals. Therefore, access point 1 240 needs to send unavailability information to access point 2 250 to avoid signal conflicts. Additionally, stations 2 220 and 3 230 may also need this unavailability information to avoid interference.

In seamless roaming processes for multi-link devices (Multi-link Device, MLD), target MLDs cause device unavailability during coordination phases. For example, AP MLD 1 (e.g., access point 1 240) has 2.4G+5G links while AP MLD 2 (e.g., access point 2 250) has 2.4G+5G links; during non-AP MLD roaming from AP MLD 1 to AP MLD 2,

the 5G link of AP MLD 2 becomes unavailable for 1 millisecond during execution phase. This unavailability may cause roaming failure. However, if AP MLD 2 sends this unavailability information to AP MLD 1 during preparation or execution phases, these unavailability information enable AP MLD 1 to make correct decisions.

Additionally, sharing unavailability information improves transmission success rates for traffic within the BSS of access point 2 250. When access point 2 250 and station 2 220 establish a 2.4G+5G multi-link operation (Multi-Link Operation, MLO) link, if access point 2 250 knows about the conflict information, it may ignore sending signals on 2.4G and transmit all traffic via 5G.

As mentioned above, wireless channels are fundamental to system design, network optimisation and performance evaluation. In some cases such as off-channel scanning, peer-to-peer networks, licensed-assisted access and 5G NR-U in unlicensed spectrum, wireless channels may be occupied.

However, other devices in the network cannot instantly know about wireless channel unavailability information, leading to packet loss or reduced transmission rates.

Therefore, example embodiments of the present disclosure propose a communication scheme where first device 110 generates unavailability information comprising at least an indication that first device 110 is unavailable for communication on a predetermined frequency band during a predetermined time period, an identifier of first device 110, and a reason associated with the unavailability information. First device 110 sends this unavailability information to second device 120 in a predetermined frame structure.

Example embodiments of the present disclosure provide a process for coordinating unavailability signalling capability that enables sharing of access point or station unavailability within basic service sets or overlapping basic service set access points. Access points may send initial control frames, multi-user request to send frames or buffer status report polling requests to other access points to provide unavailability information. This coordination unavailability signalling capability can be signalled by access points or access point MLDs.

This way, example embodiments of the present disclosure provide a process for sending unavailability information via signalling across multi-access point groups to overlapping basic service sets, thereby reducing packet loss probability, improving network transmission rates and providing more stable network connections.

Further details regarding principles and exemplary implementations will be described with reference to the drawings below.

In some implementations, technical solutions of the present disclosure may be used for long-term unavailability signalling (outside TXOP) or periodic unavailability signalling.

FIG. 3 shows a schematic diagram of communication process 300 according to some example embodiments of the present disclosure. Communication process 300 shown in FIG. 3 involves first device 110, second device 120 and third device 130. For convenience of explanation, communication process 300 will be described with reference to the environment shown in FIG. 1.

It should be understood that at least part of actions performed at first device 110 may also be performed at second device 120 and/or third device 130; at least part of actions performed at second device 120 may also be performed at first device 110 and/or third device 130.

FIG. 3 shows a scenario for long-term unavailability signalling or periodic unavailability signalling. In this scenario, multi-AP coordination unavailability relationship is established between second device 120 (i.e., access point 1) and third device 130 (i.e., access point 2), with overlapping BSSs of second device 120 and third device 130. First device 110 (i.e., station 1) has in-device coexistence between Bluetooth and 2.4 GHz.

In some implementations, second device 120 and third device 130 may negotiate unavailability information. For example, multiple access points may exchange each other's unavailability information.

As shown in FIG. 3, second device 120 may send (302) its own unavailability information to third device 130; the unavailability information of second device 120 may include an indication that second device 120 is unavailable for communication on a predetermined frequency band during another predetermined time period.

In some implementations, third device 130 may also send its unavailability information to second device 120.

As shown in FIG. 3, first device 110 generates unavailability information of first device 110.

In some implementations, the unavailability information comprises at least an indication that first device 110 is unavailable for communication on a predetermined frequency band during a predetermined time period. For example, due to Bluetooth and 2.4G signal conflict issues, if first device 110 uses Bluetooth communication during certain predetermined time periods, it becomes unavailable for 2.4G communication (e.g., Wi-Fi communication on 2.4G) during those periods.

In some implementations, first device 110 sends (305) unavailability information to second device 120 in a predetermined frame structure. In some implementations for long-term or periodic unavailability signalling scenarios, first device 110 sends the unavailability information to second device 120 via target wake time (Target Wake Time, TWT) elements with specific frames.

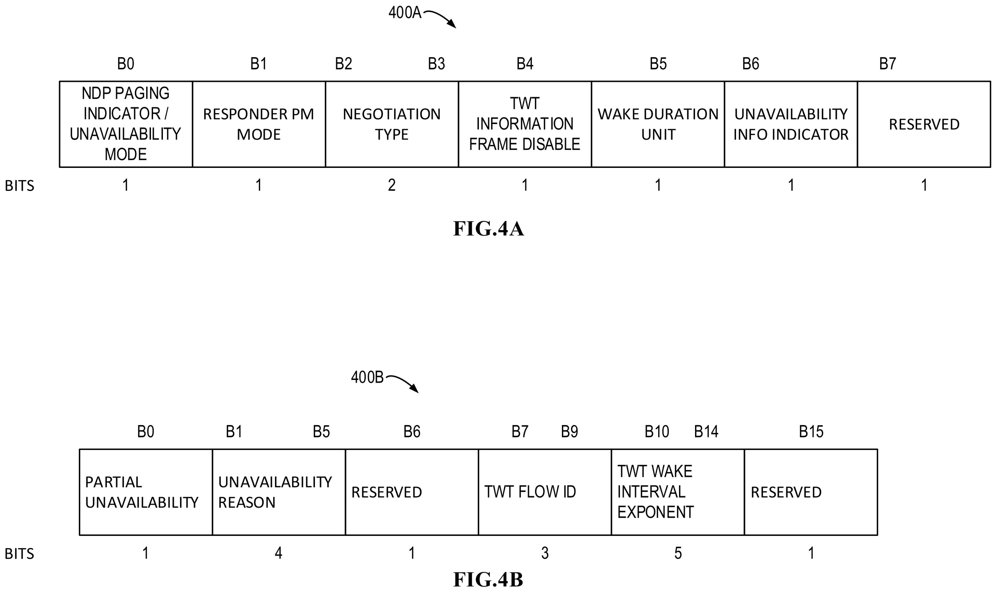

In some implementations, second device 120 receives unavailability information of first device 110 in a predetermined frame structure (e.g., above-mentioned TWT frames). For example, second device 120 may receive unavailability information of first device 110 via target wake time elements. Below will describe target wake time elements with reference to FIGS. 4A to 4G.

FIG. 4A shows a schematic diagram of frame format 400A for target wake time elements according to some example embodiments of the present disclosure. The target wake time element frame may indicate unavailability signalling or control unavailability. As shown in FIG. 4A, the target wake time element may include:
➢ NDP (Null Data Packet) page indicator/unavailability mode: NDP page indicator indicates whether NDP page function is supported or enabled; unavailability mode indicates device unavailability mode (e.g., sleep state, network failure or negotiation failure);
➢ Responder PM (Power Management) mode: indicates responder's power management mode for describing how devices manage power states under specific communication protocols or mechanisms;
➢ Negotiation type: indicates how STA and AP negotiate wake-up time;
➢ TWT information frame disable: indicates whether client device disables reception of TWT information frames;
➢ Wake duration unit: indicates minimum wake duration of the device;
➢ Unavailability indicator: indicates whether TWT element includes unavailability information (1 indicates inclusion, 0 indicates exclusion);
➢ Reserved: reserved for indicating other information.

In some implementations, if the unavailability indicator is 1 in the above-mentioned TWT elements, the TWT elements include unavailability information and the unavailability information further comprises an identifier of first device 110 (e.g., device ID).

In some implementations, the unavailability information may further comprise a reason associated with the unavailability.

In some implementations, the reason associated with the unavailability information may include first device 110 being scheduled to communicate on another predetermined frequency band with second device 120 during the predetermined time period. For example, first device 110 uses Bluetooth communication with second device 120 during predetermined time periods, or first device 110 uses LTE protocol for communication with second device 120. In some examples, reasons may also include first device 110 using 5G NR (New Radio) protocol for communication with second device 120 during predetermined time periods.

In some implementations, the reason associated with unavailability information may further include first device 110 being in tunneled direct link setup (Tunneled Direct Link Setup, TDLS) mode during the predetermined time period. In some implementations, the reason may also include first device 110 performing channel measurement during the predetermined time period.

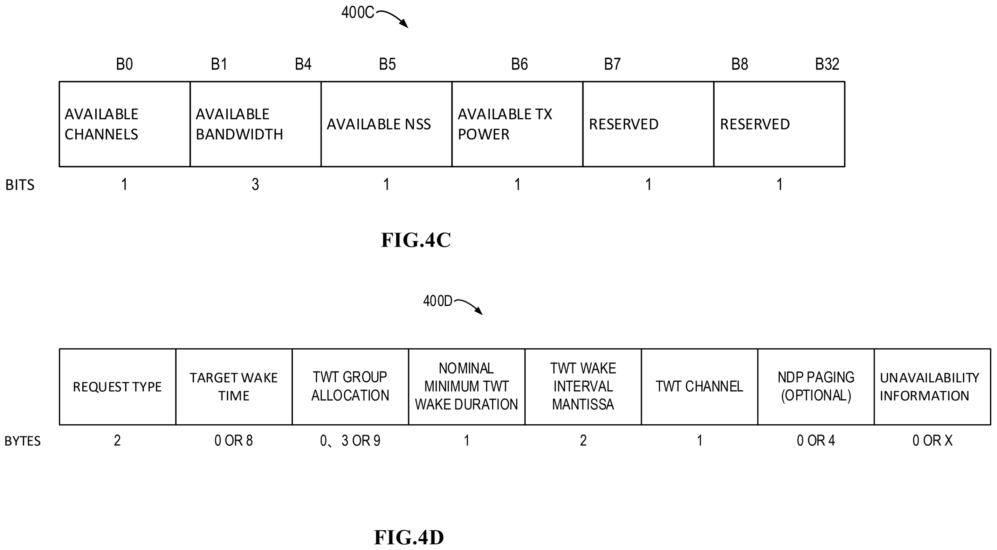

FIG. 4B shows a schematic diagram of target wake time parameter set field 400B according to some example embodiments of the present disclosure. The target wake time parameter set field (e.g., in request type field format) may indicate detailed unavailability information. As shown in FIG. 4B, the target wake time parameter set field may include:
➢ Partial unavailability: indicates whether device (i.e., first device 110) is unavailable during partial service period (0 indicates full service period unavailability; 1 indicates partial service period unavailability); if this field is 1, additional information included in unavailability information is shown in FIG. 4C;
➢ Unavailability reason: indicates device unavailability reason (1 for Bluetooth-related in-device coexistence; 2 for LTE-related in-device coexistence; 3 for 5G NR-related in-device coexistence; 4 for TDLS mode; 5 for channel measurement); other values may be reserved for other reasons;
➢ TWT flow identifier: identifies TWT session between device and AP;
➢ TWT wake interval exponent: indicates calculation of device wake-up interval time;
➢ Reserved: reserved for indicating other information.

In some implementations, if unavailability information indicates first device 110 is unavailable during partial service period (e.g., partial unavailability field in FIG. 4B is 1), the unavailability information further comprises available channels of first device 110, available bandwidth of first device 110, number of available spatial streams of first device 110, and available transmission power of first device 110.

FIG. 4C shows a schematic diagram of partial availability information element 400C according to some example embodiments of the present disclosure. As shown in FIG. 4C, partial availability information may include:
➢ Available channels: indicates available channel resources;
➢ Available bandwidth: indicates available bandwidth resources;
➢ Number of Spatial Streams (NSS): indicates number of simultaneous data streams;
➢ Available transmission power: indicates device's available transmission power;
➢ Reserved: reserved for indicating other information.

In some implementations, detailed unavailability information may be indicated in a single TWT parameter set field.

FIG. 4D shows a schematic diagram of single TWT parameter set field 400D according to some example embodiments of the present disclosure. As shown in FIG. 4D, single TWT parameter set field may include:
➢ Request type: indicates specific type of TWT request;
➢ Target wake time: indicates device's target wake-up time;
➢ TWT group allocation: indicates TWT group to which device belongs;
➢ Nominal minimum TWT wake duration: indicates minimum wake duration during TWT session;
➢ TWT wake interval mantissa: used for calculating device wake-up interval time;
➢ TWT channel: indicates channel used by device in TWT session;
➢ NDP page (optional): indicates whether NDP page function is supported or enabled;
➢ Unavailability information: indicates device unavailability information.

In some implementations, the reason associated with unavailability information includes first device 110 performing channel measurement during predetermined time period. For example, if unavailability reason indicates first device 110 performs channel measurement (e.g., channel off scanning), i.e., unavailability reason field in FIG. 4B is 5, information associated with channel measurement may be added to unavailability information.

In some implementations, the unavailability information further comprises information associated with channel measurement. In some implementations, information associated with channel measurement includes channel measurement type, channel measurement mode, measurement start time, channel measurement duration, channel measurement information parameters, channel measurement operation category, number of measured channels and bandwidth indication.

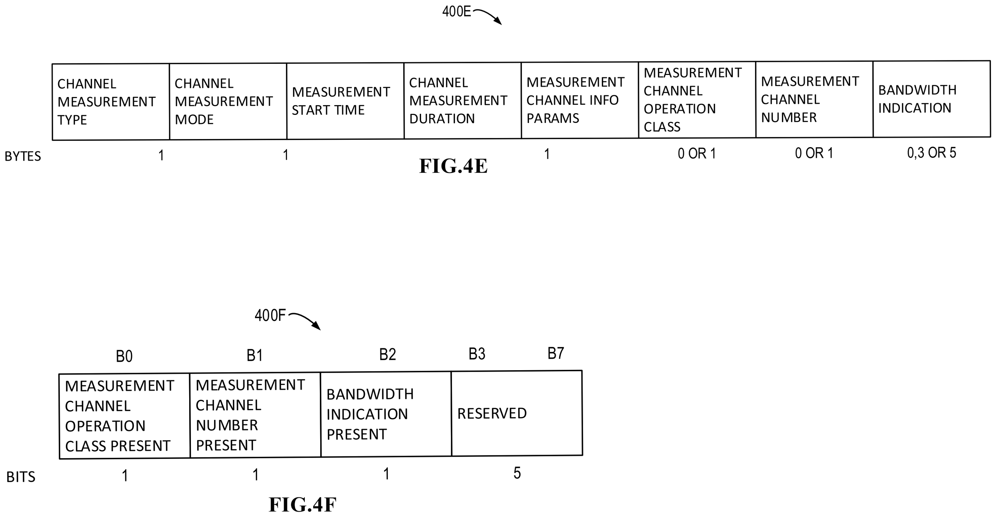

FIG. 4E shows a schematic diagram of measurement information element 400E according to some example embodiments of the present disclosure. Element 400E may indicate above-mentioned information associated with channel measurement. As shown in FIG. 4E, measurement information element may include:
➢ Channel measurement type: set to specific value indicating purpose of measurement;
➢ Channel measurement mode: indicates any restrictions on transmission on new channels (access point or station sets channel switching mode field to 0 or 1);
➢ Measurement start time: set to Time Synchronization Function (TSF) at start time of channel measurement announcement (±32 microseconds), where 0 indicates immediate channel measurement start;
➢ Channel measurement duration: set as duration of channel measurement expressed in Time Unit (TU);
➢ Channel measurement information parameters: key parameters for configuring and executing channel measurements, e.g., included in element shown in FIG. 4F;
➢ Channel measurement operation category: indicates parameters for channel measurement (e.g., frequency range, channel bandwidth, measurement category);
➢ Number of measured channels: identifies specific measured channels or bands;
> Bandwidth indication: indicates frequency range, subcarrier spacing, channel bandwidth configuration parameters for channel measurement.

FIG. 4F shows a schematic diagram of channel measurement information parameter element 400F according to some example embodiments of the present disclosure. Element 400F may indicate channel measurement information parameters shown in FIG. 4E. As shown in FIG. 4F, channel measurement information parameters may include:
➢ Channel measurement operation category presence: indicates whether channel measurement operation category is explicitly indicated or configured;
➢ Number of measured channels presence: indicates whether number of measured channels is explicitly configured;
➢ Bandwidth indication presence: indicates whether network configures measurement bandwidth for device;
➢ Reserved: reserved for indicating other information.

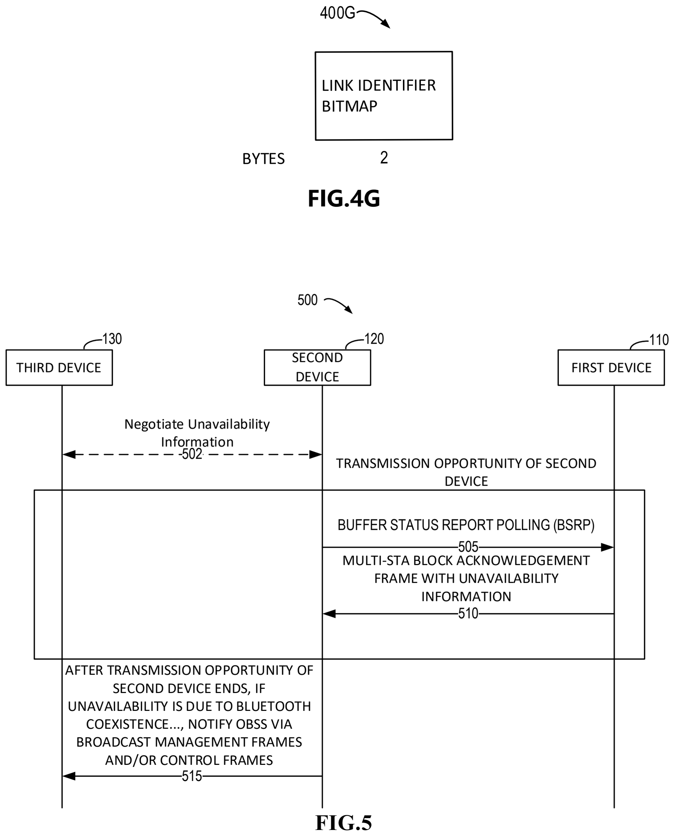

FIG. 4G shows a schematic diagram of link identifier element 400G according to some example embodiments of the present disclosure. Link identifier element 400G may indicate information associated with links.

In some implementations, if reporting unavailability information device is MLD (i.e., multi-link operation supporting device), and unavailability information indicates unavailable link, unavailability information further comprises link identifier bitmap.

In some implementations, the link identifier bitmap indicates links used by point-to-point MLD devices associated with stations.

In some implementations, when i-th bit in above-mentioned link identifier bitmap field is 1, it represents link ID (i.e., identifier) as i.

In some implementations, based on unavailability information received from first device 110, second device 120 may postpone or cancel packet sending, or send packets only on available channels.

Continuing reference to FIG. 3, in some implementations, second device 120 sends (310) unavailability information to at least one third device 130 in response to receiving unavailability information from first device 110.

In some implementations, second device 120 sends unavailability information to at least one third device 130 via management frames and/or control frames. In some implementations, the management frames include beacon frames.

For example, second device 120 may send unavailability information of first device 110 in Quality of Service Basic Service Set Load Information Element within beacon frames; other stations associated with second device 120 or third device 130 may obtain unavailability information of first device 110 via these beacon frames.

In some implementations, associated stations may skip sending 2.4G signals during periods when first device 110 uses Bluetooth services; thus, signal conflicts between Bluetooth and 2.4G can be avoided.

In some implementations, the control frames may also include multi-user request to send frames (Multi-User Request to Send frame, MU-RTS frame). Second device 120 may carry unavailability information in initial control frames (e.g., multi-user request to send trigger frames) to directly notify third device 130 of unavailability information.

In some implementations, third device 130 performs channel transmission with first device 110 outside predetermined time period based on unavailability information.

This way, by sharing unavailability information across multiple devices as described above, example embodiments of the present disclosure reduce signal conflict occurrences, thereby lowering packet loss probability and improving transmission rates.

In some implementations, technical solutions of the present disclosure may be used for short-term unavailability signalling or non-periodic unavailability signalling.

FIG. 5 shows a schematic diagram of communication process 500 according to some example embodiments of the present disclosure. Communication process 500 shown in FIG. 5 involves first device 110, second device 120 and third device 130. For convenience of explanation, communication process 500 will be described with reference to environment shown in FIG. 1.

It should be understood that at least part of actions performed at first device 110 may also be performed at second device 120 and/or third device 130; at least part of actions performed at second device 120 may also be performed at first device 110 and/or third device 130.

FIG. 5 shows a scenario for unavailability information sharing based on negotiation, where multi-AP coordination unavailability signalling relationship is established between second device 120 and third device 130 with overlapping BSSs of second device 120 and third device 130.

In some implementations, second device 120 and third device 130 may negotiate unavailability information; for example, multiple access points exchange each other's unavailability information.

As shown in FIG. 5, second device 120 sends (502) its own unavailability information to third device 130; the unavailability information of second device 120 may include an indication that second device 120 is unavailable for communication on a predetermined frequency band during another predetermined time period.

In some implementations, third device 130 may also send its unavailability information to second device 120.

In some implementations, second device 120 sends (505) buffer status report polling initial control frame to first device 110 within transmission opportunity of second device 120. In other words, second device 120 negotiates unavailability information sharing process with first device 110 via initial control frames.

For example, when second device 120 obtains TXOP and sends packets to first device 110, second device 120 may send buffer status report polling initial control frame to negotiate unavailability response from first device 110.

In some implementations, in response to determination that buffer status report polling initial control frame indicates request for unavailability information, first device 110 sends (510) unavailability information to second device 120 via multi-station block acknowledgement frame (Multi-STA Block Acknowledgement frame) within transmission opportunity in periodic or non-periodic manner.

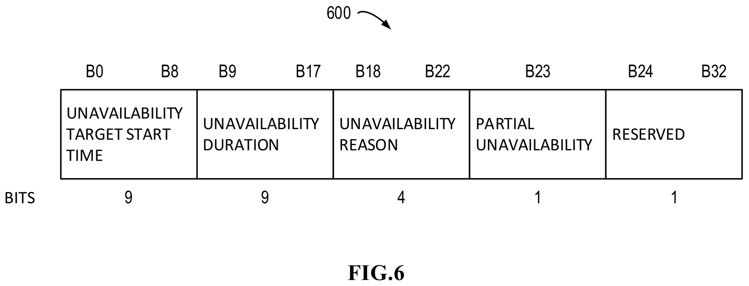

FIG. 6 shows a schematic diagram of multi-station block acknowledgement frame 600 according to some example embodiments of the present disclosure. Multi-station block acknowledgement frame 600 may include unavailability information indication in block acknowledgement bitmap subfield (Block Ack Bitmap subfield), which is a feedback subfield (Feedback subfield) with specific length identical to multi-STA block ack variant Block Ack Bitmap subfield. As shown in FIG. 6, multi-station block acknowledgement frame may include:
> Unavailability target start time: indicates device entering unavailability state at specific time;
➢ Unavailability duration: indicates duration of device's unavailability state;
➢ Unavailability reason: indicates device unavailability reason (1 for Bluetooth-related in-device coexistence; 2 for LTE-related in-device coexistence; 3 for 5G NR-related in-device coexistence; 4 for TDLS mode; 5 for channel measurement); other values may be reserved for other reasons;
➢ Partial unavailability: indicates whether device (i.e., first device 110) is unavailable during partial service period (0 for full service period unavailability; 1 for partial service period unavailability); if this field is 1, additional information included in unavailability information is shown in FIG. 4C;
➢ Reserved: reserved for indicating other information.

In some implementations, multi-station block acknowledgement frame or block ack feedback frames may include other unavailability information described above with reference to FIGS. 4C, 4E and 4F.

In some implementations, after receiving unavailability information from first device 110, second device 120 makes decisions to postpone packet sending or send packets only on available channels.

Continuing reference to FIG. 5, in some implementations, second device 120 sends (515) unavailability information to at least one third device 130 via management frames and/or control frames.

In some implementations, the management frames include beacon frames and the control frames include multi-user request to send frames and buffer status report polling initial control frames.

For example, after transmission opportunity of second device 120, second device 120 sends beacon frames or multi-user request to send frames to notify devices within BSS or overlapping BSSs about unavailability information of first device 110 (if communication connection is not terminated).

Alternatively or additionally, second device 120 may send unavailability information to at least one third device 130 based on identifier caching functionality.

In some implementations, third device 130 performs channel transmission with first device 110 outside predetermined time period based on unavailability information.

This way, by sharing unavailability information via negotiation as described above, example embodiments of the present disclosure avoid signal conflicts caused by wireless channel occupation (e.g., 2.4 GHz wireless channels) and improve communication reliability between multiple devices.

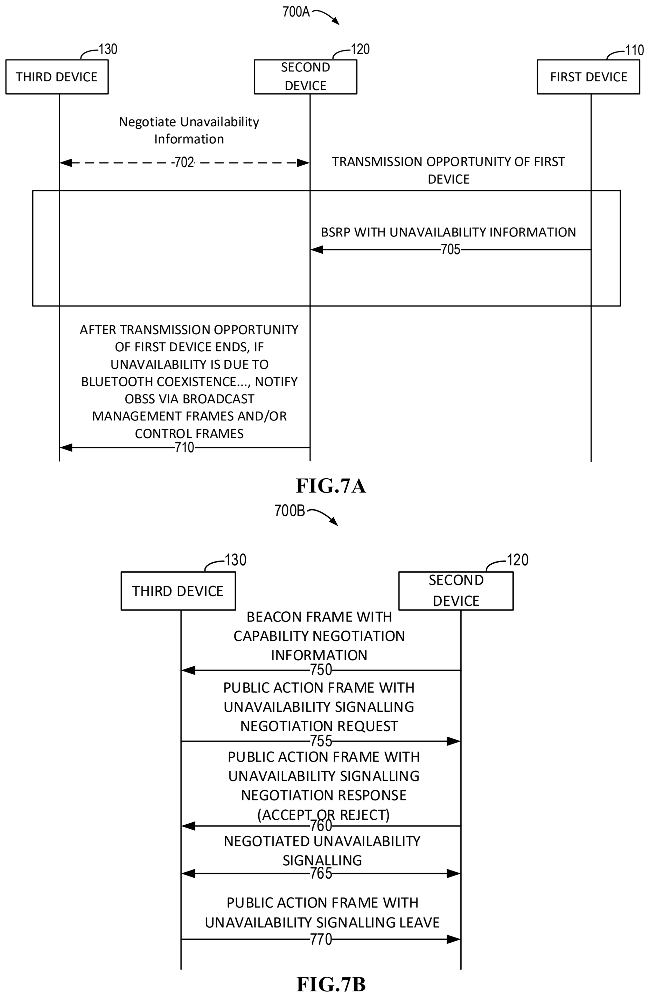

FIG. 7A shows a schematic diagram of communication process 700A according to some example embodiments of the present disclosure. Communication process 700A shown in FIG. 7A involves first device 110, second device 120 and third device 130. For convenience of explanation, communication process 700A will be described with reference to environment shown in FIG. 1.

It should be understood that at least part of actions performed at first device 110 may also be performed at second device 120 and/or third device 130; at least part of actions performed at second device 120 may also be performed at first device 110 and/or third device 130.

FIG. 7A shows a scenario for short-term unavailability signalling or non-periodic unavailability signalling, where overlapping BSSs exist between second device 120 and third device 130 without negotiation required for unavailability information sharing.

As shown in FIG. 7A, second device 120 sends (702) its own unavailability information to third device 130; the unavailability information of second device 120 may include an indication that second device 120 is unavailable for communication on a predetermined frequency band during another predetermined time period.

In some implementations, third device 130 may also send its unavailability information to second device 120.

In some implementations, first device 110 sends (705) unavailability information to second device 120 within transmission opportunity of first device 110 via buffer status report polling initial control frame.

For example, first device 110 obtains TXOP and directly sends buffer status report polling initial control frame carrying unavailability information to second device 120.

Alternatively or additionally, in some implementations, second device 120 may send buffer status report polling initial control frame carrying unavailability information to first device 110.

In some implementations, second device 120 sends (710) unavailability information to at least one third device 130 via management frames and/or control frames.

In some implementations, the management frames include beacon frames and the control frames include multi-user request to send frames and buffer status report polling initial control frames.

For example, after transmission opportunity of first device 110, second device 120 sends beacon frames or multi-user request to send frames to notify devices within BSS or overlapping BSSs about unavailability information of first device 110 (if communication connection is not terminated).

Alternatively or additionally, second device 120 may send unavailability information to at least one third device 130 based on identifier caching functionality.

In some implementations, third device 130 performs channel transmission with first device 110 outside predetermined time period based on unavailability information.

This way, by sharing unavailability information without negotiation as described above, example embodiments of the present disclosure improve efficiency of unavailability information sharing across multiple devices, thereby avoiding signal conflicts caused by wireless channel occupation (e.g., 2.4 GHz wireless channels) and improving communication reliability between multiple devices.

FIG. 7B shows a schematic diagram of communication process 700B according to some example embodiments of the present disclosure. Communication process 700B shown in FIG. 7B involves second device 120 and third device 130. For convenience of explanation, communication process 700B will be described with reference to environment shown in FIG. 1.

FIG. 7B shows a scenario for negotiating unavailability information where multiple access points (e.g., second device 120 and third device 130) share their unavailability information mutually. In this scenario, access points or AP MLDs signal negotiation capability for unavailability signalling to enable other devices in the network to know that these access points or MLDs support unavailability signalling negotiation.

As shown in FIG. 7B, in some implementations, second device 120 generates its own unavailability information or unavailability signalling.

In some implementations, the unavailability signalling (or unavailability information) comprises at least an indication that second device 120 is unavailable for communication on a predetermined frequency band during another predetermined time period.

As shown in FIG. 7B, second device 120 exchanges (750) capability negotiation information with at least one third device 130 via beacon frames.

In some implementations, the capability negotiation information indicates that second device 120 and at least one third device 130 have capability to share unavailability information.

In some implementations, based on received capability negotiation information, third device 130 sends (755) public action frame with unavailability signalling negotiation request to second device 120.

In some implementations, in response to received unavailability signalling negotiation request, second device 120 sends (760) public action frame with unavailability signalling negotiation response to third device 130.

In some implementations, the unavailability signalling negotiation response indicates whether second device 120 accepts or rejects the unavailability signalling negotiation request from third device 130.

In some implementations, as shown in FIG. 7B, if second device 120 accepts the request, second device 120 and third device 130 send (765) negotiated unavailability signalling to share their respective unavailability information.

In some implementations, after negotiation process ends, third device 130 sends (770) public action frame with unavailability signalling leave to second device 120 to indicate end of negotiation process.

Example embodiments of the present disclosure also provide technical solutions for BSS unavailability information. These BSS unavailability information may include access point unavailability information and be used for negotiating unavailability information between multiple access points (e.g., scenario shown in FIG. 7B). For example, unavailability information of access point 1 (e.g., second device 120) may be sent to access point 2 (e.g., third device 130).

In some implementations, the BSS unavailability information may include unavailability information of access points within BSS (e.g., second device 120) or multiple stations (e.g., first device 110); BSS unavailability information may also be transmitted to other devices within BSS or overlapping BSSs during unavailability information sharing process.

In some implementations, the BSS unavailability information may be signalled via new unavailability element in management frames to notify devices within BSS or overlapping BSSs.

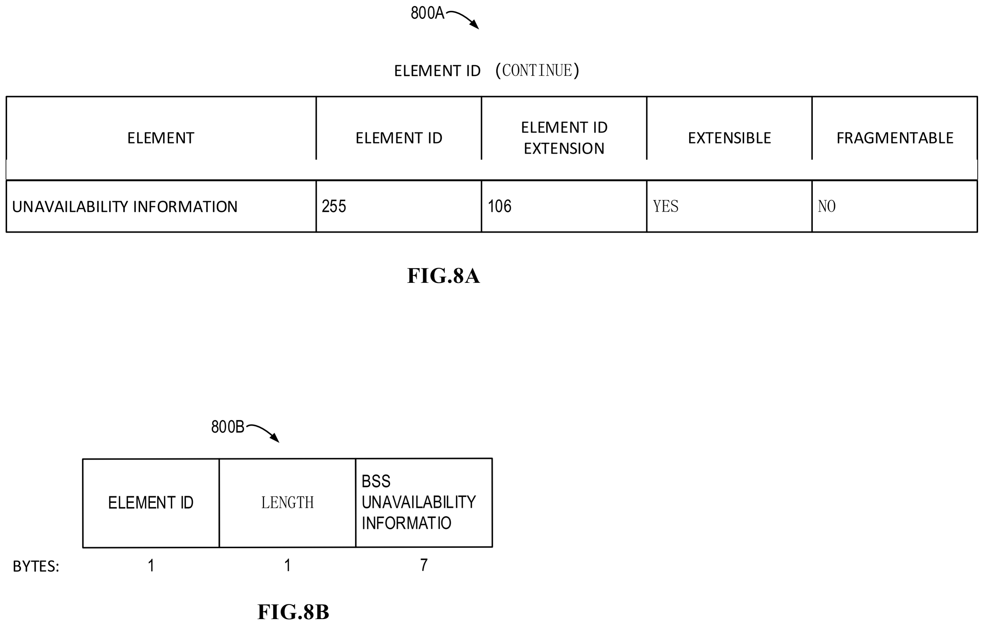

FIG. 8A shows structure of new element 800A according to some example embodiments of the present disclosure. As shown in FIG. 8A, element 800A may include:
➢ Element name;
➢ Element ID;
➢ Element ID extension;
➢ Extensible;
➢ Fragmentable.

FIG. 8B shows frame structure 800B of new elements according to some example embodiments of the present disclosure. As shown in FIG. 8B, frame structure 800B includes:
> Element ID;
> Length;
> BSS unavailability information;

In some implementations, the unavailability information (i.e., BSS unavailability information) further comprises identifier of second device 120, target start time of predetermined time period, length of predetermined time period, and description information associated with unavailability reason.

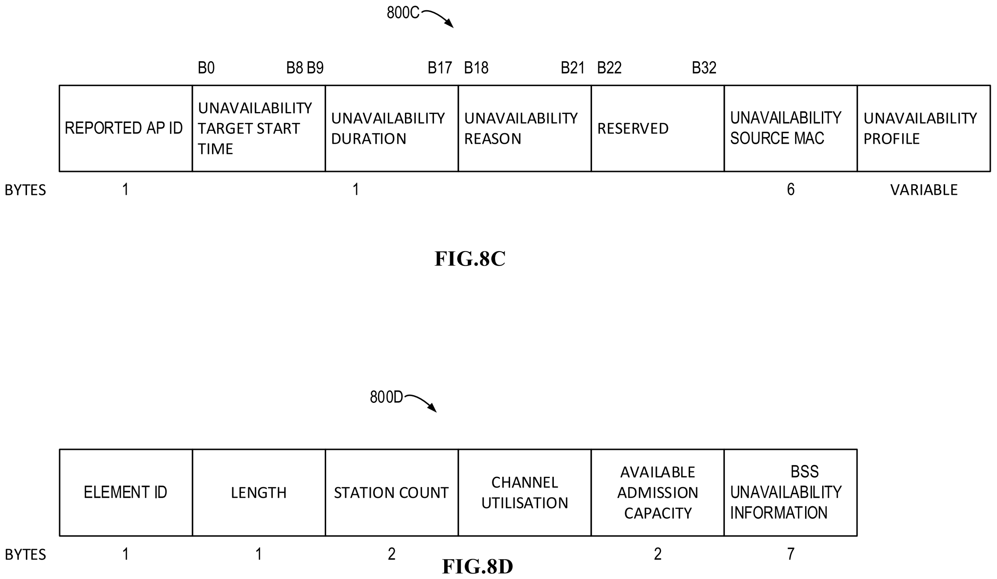

FIG. 8C shows frame structure 800C of BSS unavailability information according to some example embodiments of the present disclosure. As shown in FIG. 8C, frame structure 800C includes:
➢ Reported AP ID: ID of access point allocated by Multi-AP Coordination Indicator for reporting unavailability;
➢ Unavailability target start time: TSF time reported by station for unavailability;
➢ Unavailability duration: duration of unavailability reported by station in 64 microsecond units;
➢ Unavailability reason: station's unavailability reason;
➢ Unavailability source MAC: MAC address of access point or station causing unavailability;
➢ Unavailability profile: detailed unavailability information for each unavailability reason;
➢ Reserved: reserved for indicating other information.

Alternatively or additionally, BSS unavailability information may be added to existing elements as BSS Load element (BSS Load element).

In some implementations, the unavailability information may be included in initial control frames such as multi-user request to send frames or buffer status report polling initial control frames; special user information fields may carry this unavailability request.

FIG. 8D shows format of BSS load element 800D according to some example embodiments of the present disclosure. As shown in FIG. 8D, BSS load element format 800D includes:
> Element ID;
➢ Length;
➢ Station count;
➢ Channel utilisation;
➢ Available admission capacity;
➢ BSS unavailability information: indicates unavailability information of devices within BSS.

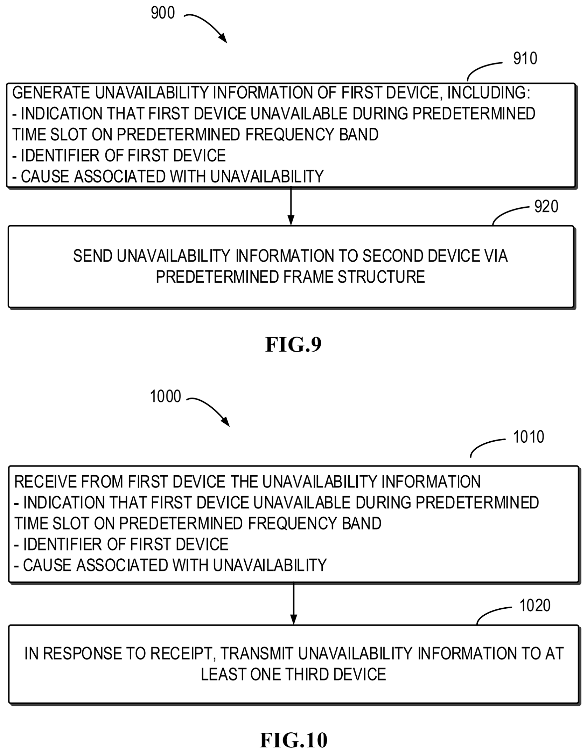

FIG. 9 shows a flowchart of communication method according to some example embodiments of the present disclosure. Method 900 may be implemented at first device 110.

At block 910, first device 110 generates unavailability information of first device 110, wherein the unavailability information comprises at least an indication that first device 110 is unavailable for communication on a predetermined frequency band during a predetermined time period, an identifier of first device 110, and a reason associated with the unavailability information.

At block 920, first device 110 sends the unavailability information to second device 120 in a predetermined frame structure.

In some example embodiments, method 900 further comprises: sending the unavailability information to second device 120 via target wake time element (400A) with specific frames, wherein target wake time element comprises at least point-to-point target wake time element and broadcast target wake time element.

In some example embodiments, reason associated with unavailability information comprises: first device 110 being scheduled to communicate on another predetermined frequency band with other devices different from second device 120 and third device 130 during predetermined time period; first device 110 being in tunneled direct link mode during predetermined time period; or first device 110 performing channel measurement during predetermined time period.

In some example embodiments, reason comprises first device 110 performing channel measurement during predetermined time period, and unavailability information further comprises information associated with channel measurement including: channel measurement type; channel measurement mode; measurement start time; channel measurement duration; channel measurement information parameters; channel measurement operation category; number of measured channels; bandwidth indication.

In some example embodiments, method 900 further comprises: receiving buffer status report polling initial control frame from second device 120 within transmission opportunity of second device 120; and responding to determination that buffer status report polling initial control frame indicates request for unavailability information, sending unavailability information to second device 120 via multi-station block acknowledgement frame in periodic or non-periodic manner within transmission opportunity.

In some example embodiments, method 900 further comprises: sending unavailability information to second device 120 within transmission opportunity of first device 110 via buffer status report polling initial control frame and/or multi-user request to send frames.

In some example embodiments, unavailability information indicates partial service unavailability of first device during predetermined time period, and unavailability information further comprises: available channels of first device; available bandwidth of first device; number of available spatial streams of first device; available transmission power of first device.

In some example embodiments, unavailability information further comprises at least one of: identifier of second device; target start time of predetermined time period; length of predetermined time period; description information associated with unavailability reason; or information associated with link.

In some example embodiments, first device comprises terminal device and second device comprises network device for Wi-Fi communication.

In some example embodiments, third device comprises terminal device or network device for Wi-Fi communication.

FIG. 10 shows a flowchart of communication method according to some example embodiments of the present disclosure. Method 1000 may be implemented at second device 120.

At block 1010, second device 120 receives unavailability information of first device in predetermined frame structure from first device, wherein the unavailability information comprises at least an indication that first device is unavailable for communication on a predetermined frequency band during a predetermined time period, an identifier of first device, and a reason associated with the unavailability information.

At block 1020, second device 120 sends unavailability information to at least one third device in response to receiving unavailability information from first device.

In some example embodiments, method 1000 further comprises: receiving target wake time element (400A) including unavailability information from first device, wherein target wake time element comprises at least point-to-point target wake time element and broadcast target wake time element; and sending unavailability information to at least one third device via management frames and/or control frames, wherein management frames comprise beacon frames and control frames comprise multi-user request to send frames and buffer status report polling initial control frames.

In some example embodiments, reason associated with unavailability information comprises: first device being scheduled to communicate on another predetermined frequency band with other devices different from second device and at least one third device during predetermined time period; first device being in tunneled direct link mode during predetermined time period; or first device performing channel measurement during predetermined time period.

In some example embodiments, reason comprises performing channel measurement, unavailability information further comprises information associated with channel measurement including: channel measurement type; channel measurement mode; measurement start time; channel measurement duration; channel measurement information parameters; channel measurement operation category; number of measured channels; bandwidth indication.

In some example embodiments, receiving unavailability information from first device in predetermined frame structure comprises: sending buffer status report polling initial control frame to first device within transmission opportunity of second device, wherein buffer status report polling initial control frame indicates request for unavailability information; and receiving unavailability information from first device via multi-station block acknowledgement frame (600) in periodic or non-periodic manner within transmission opportunity of second device.

In some example embodiments, receiving unavailability information from first device in predetermined frame structure comprises: receiving unavailability information from first device via buffer status report polling initial control frame and/or multi-user request to send frames within transmission opportunity of first device.

In some example embodiments, sending unavailability information to at least one third device further comprises: sending unavailability information to at least one third device via management frames and/or control frames, wherein management frames comprise beacon frames and control frames comprise multi-user request to send frames and buffer status report polling initial control frames.

In some example embodiments, sending unavailability information to at least one third device further comprises: sending unavailability information to at least one third device based on identifier caching functionality.

In some example embodiments, unavailability information indicates partial service unavailability of first device during partial service period of first device, and unavailability information further comprises: available channels of first device; available bandwidth of first device; number of available spatial streams of first device; available transmission power of first device.

In some example embodiments, unavailability information further comprises at least one of: identifier of second device; target start time of predetermined time period; length of predetermined time period; description information associated with unavailability reason; or information associated with link.

In some example embodiments, method 1000 further comprises: exchanging capability negotiation information via beacon frames with at least one third device, wherein capability negotiation information indicates that second device and at least one third device have capability to share unavailability information.

In some example embodiments, method 1000 further comprises: generating unavailability information of second device, wherein unavailability information of second device comprises at least an indication that second device is unavailable for communication on a predetermined frequency band during another predetermined time period; and sending unavailability information of second device to at least one third device.

In some example embodiments, first device comprises terminal device, second device comprises network device for Wi-Fi communication, at least one third device comprises terminal device or network device for Wi-Fi communication, and first device, second device and at least one third device comprise multi-link operation supporting devices.

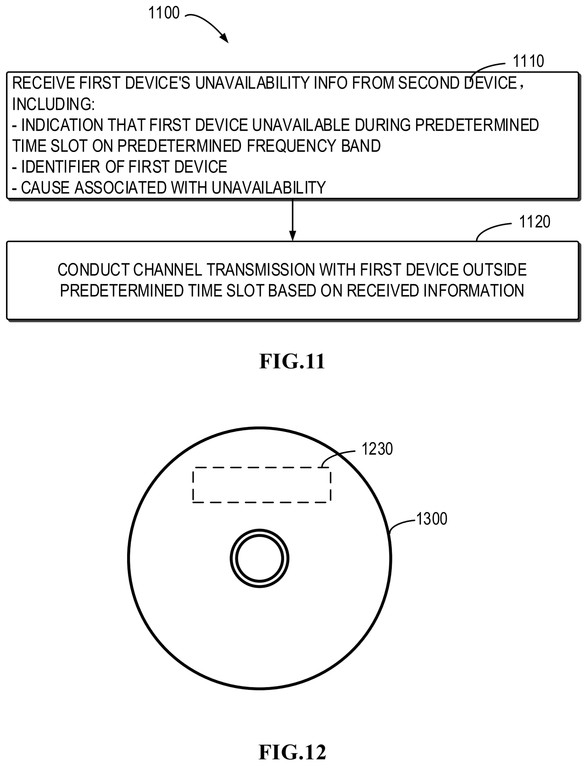

FIG. 11 shows a flowchart of communication method according to some example embodiments of the present disclosure. Method 1100 may be implemented at third device 130.

At block 1110, third device 130 receives unavailability information of first device from second device in predetermined frame structure, wherein the unavailability information comprises at least an indication that first device is unavailable for communication on a predetermined frequency band during a predetermined time period, an identifier of first device, and a reason associated with the unavailability information.

At block 1120, third device 130 performs channel transmission with first device outside predetermined time period based on unavailability information.

In some example embodiments, receiving unavailability information from second device via management frames and/or control frames, wherein management frames comprise beacon frames and control frames comprise multi-user request to send frames and buffer status report polling initial control frames.

In some example embodiments, receiving unavailability information of first device from second device further comprises: receiving unavailability information based on identifier caching functionality from second device.

In some example embodiments, reason associated with unavailability information comprises: first device being scheduled to communicate on another predetermined frequency band with other devices different from second device and third device during predetermined time period; first device being in tunneled direct link mode during predetermined time period; or first device performing channel measurement during predetermined time period.

In some example embodiments, reason comprises performing channel measurement, unavailability information further comprises information associated with channel measurement including: channel measurement type; channel measurement mode; measurement start time; channel measurement duration; channel measurement information parameters; channel measurement operation category; number of measured channels; bandwidth indication.

In some example embodiments, unavailability information indicates partial service unavailability of first device during partial service period of first device, and unavailability information further comprises: available channels of first device; available bandwidth of first device; number of available spatial streams of first device; available transmission power of first device.

In some example embodiments, unavailability information further comprises at least one of: identifier of second device; target start time of predetermined time period; length of predetermined time period; description information associated with unavailability reason; or information associated with link.

In some example embodiments, method 1100 further comprises: exchanging capability negotiation information via beacon frames with second device, wherein capability negotiation information indicates that second device and at least one third device have capability to share unavailability information.

In some example embodiments, method 1100 further comprises: receiving unavailability information of second device from second device, wherein unavailability information of second device comprises at least an indication that second device is unavailable for communication on a predetermined frequency band during another predetermined time period.

In some example embodiments, first device comprises terminal device, second device comprises network device for Wi-Fi communication, third device comprises terminal device or network device for Wi-Fi communication, and first device, second device and third device comprise multi-link operation supporting devices.

In some example embodiments, an apparatus for communication may include components for performing corresponding steps of method 900. These components may be implemented in any appropriate manner; e.g., as circuitry or software modules.

An apparatus for communication comprises:components for generating unavailability information by first device, wherein the unavailability information comprises at least an indication that first device is unavailable for communication on a predetermined frequency band during a predetermined time period, an identifier of first device, and a reason associated with the unavailability information; and components for sending unavailability information to second device in predetermined frame structure.

In some example embodiments, an apparatus for communication may include components for performing corresponding steps of method 1000. These components may be implemented in any appropriate manner; e.g., as circuitry or software modules.

An apparatus for communication comprises:components for receiving unavailability information of first device from first device in predetermined frame structure, wherein the unavailability information comprises at least an indication that first device is unavailable for communication on a predetermined frequency band during a predetermined time period, an identifier of first device, and a reason associated with the unavailability information; and components for sending unavailability information to at least one third device in response to receiving unavailability information from first device.

In some example embodiments, an apparatus for communication may include components for performing corresponding steps of method 1100. These components may be implemented in any appropriate manner; e.g., as circuitry or software modules.

An apparatus for communication comprises: components for receiving unavailability information of first device from second device in predetermined frame structure, wherein the unavailability information comprises at least an indication that first device is unavailable for communication on a predetermined frequency band during a predetermined time period, an identifier of first device, and a reason associated with the unavailability information; and components for performing channel transmission with first device outside predetermined time period based on unavailability information.

FIG. 12 shows simplified block diagram of device 1200 suitable for implementing example embodiments of the present disclosure. Device 1200 may be used to implement first device 110, second device 120 and/or third device 130 in communication network 100. As shown, device 1200 comprises one or more processing units 1210 coupled to one or more memories 1220, and a communications module 1240 coupled to processing unit 1210.

Communications module 1240 is used for bidirectional communication. In some example embodiments, communications module 1240 may have at least one antenna for communication. In some example embodiments, communications module 1240 may comprise one or more communication interfaces; communication interface represents any interface required for communicating with other network elements.

Processing unit 1210 may be of any type suitable for local technology networks and may include but not limited to general-purpose computers, special-purpose computers, microcontrollers, digital signal controllers (DSP), and multi-core controller architectures based on controllers. Device 1200 may have multiple processors such as application-specific integrated circuit chips synchronised with main processor clock in time.

Memory 1220 may comprise one or more non-volatile memories and one or more volatile memories. Examples of non-volatile memories include but not limited to read-only memory (ROM) 1224, erasable programmable ROM (EPROM), flash memory, hard disks, optical discs (CD), digital video discs (DVD) and other magnetic and/or optical storage. Examples of volatile memories include but not limited to random access memory (RAM) 1222 and other volatile memories that do not persist during power-off duration.

Computer program 1230 comprises computer-executable instructions executed by associated processing unit 1210. Computer program 1230 may be stored in ROM 1224. Processing unit 1210 executes any suitable actions and processes by loading computer program 1230 into RAM 1222.

Example embodiments of the present disclosure can be implemented via computer program 1230 to enable device 1200 to perform any process discussed with reference to FIGS. 2-11. Example embodiments of the present disclosure may also be implemented via hardware or combinations of software and hardware.

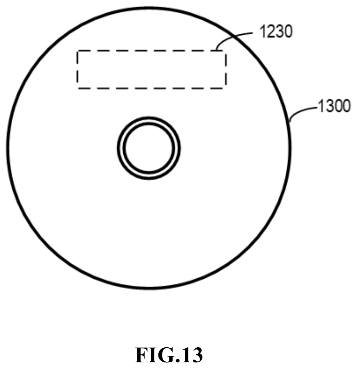

In some example embodiments, computer program 1230 may be tangibly contained in computer-readable medium which is included in device 1200 (e.g., memory 1220) or other storage devices accessible by device 1200. Computer program 1230 can be loaded from computer-readable medium to RAM 1222 for execution. Computer-readable medium may include any type of tangible non-volatile memory such as ROM, EPROM, flash memory, hard disk, CD, DVD etc. FIG. 13 shows example of computer-readable medium 1300 in CD or DVD form according to some example embodiments of the present disclosure; computer program 1230 is stored on computer-readable medium 1300.

Generally, various embodiments of the present disclosure may be implemented via hardware, dedicated circuits, software, logic or any combination thereof. Some aspects may be implemented via hardware while others may be implemented via firmware or software executed by controllers, microprocessors or other computing devices. Although aspects of example embodiments are shown and described as block diagrams, flowcharts or other graphical representations, it should be understood that blocks, devices, systems, techniques or methods described herein can be implemented as non-limiting examples in hardware, software, firmware, dedicated circuits or logic, general-purpose hardware or controllers or other computing devices, or any combination thereof.

The present disclosure also provides at least one computer program product tangibly stored on computer-readable storage medium. In some example embodiments, the computer-readable storage medium is non-transitory. The computer program product comprises computer-executable instructions such as instructions in program modules which execute on real or virtual processors of devices to perform methods described with reference to method 900 in FIG. 9, method 1000 in FIG. 10 or method 1100 in FIG. 11. Generally, program modules include routines, programs, libraries, objects, classes, components, data structures etc. that perform specific tasks or implement specific abstract data types. In various embodiments, functionality of program modules may be combined or split as needed. Machine-executable instructions for program modules may execute locally or distributedly within devices. In distributed devices, program modules may reside in local and remote storage media.

Computer program code for implementing methods of the present disclosure may be written in one or more programming languages. These computer program codes may be provided to processors of general-purpose computers, special-purpose computers or other programmable data processing apparatuses such that when executed by computers or other programmable data processing apparatuses, functions/operations specified in flowcharts and/or block diagrams are implemented. Program codes may execute entirely on a computer, partly on a computer, as independent software package, partly on a computer and partly on remote computer, or entirely on remote computer or server.

In context of present disclosure, computer program code or related data may be carried by any appropriate carrier to enable devices, apparatuses or processors to perform various processes and operations described above. Examples of carriers include signals, computer-readable media etc. Signal examples may include electrical, optical, radio, sound or other forms of propagation signals such as carriers, infrared signals etc.

Computer-readable medium may be any tangible medium containing or storing programs for or related to instruction execution systems, apparatuses or devices. Computer-readable medium may be computer-readable signal medium or computer-readable storage medium. Computer-readable medium may include but not limited to electronic, magnetic, optical, electromagnetic, infrared or semiconductor systems, apparatuses or devices, or any suitable combination thereof. More detailed examples of computer-readable storage media include electrical connections with one or more wires, portable computer disks, hard disks, random access memory (RAM), read-only memory (ROM), erasable programmable ROM (EPROM or flash memory), optical storage devices, magnetic storage devices, or any suitable combination thereof.

Additionally, although operations of methods of the present disclosure are described in specific order in drawings, this does not require or imply that these operations must be performed in such specific order, nor that all shown operations must be executed to achieve desired results. Conversely, steps depicted in flowcharts may change execution order. Additionally or alternatively, certain steps may be omitted, multiple steps combined into one step for execution, and/or one step decomposed into multiple steps for execution. It should also be noted that features and functions of two or more devices described herein may be embodied in a single device; conversely, features and functions of a single device described above may be further divided among multiple devices to embody.

Although the present disclosure has been described with reference to several specific embodiments, it should be understood that the present disclosure is not limited to disclosed specific embodiments. The present disclosure aims to cover various modifications and equivalent arrangements within spirit and scope of appended claims.

## Claims

1. A method for communication comprising:
generating unavailability information by a first device (110); the unavailability information comprises at least an indication that the first device (110) is unavailable for communication on a predetermined frequency band during a predetermined time period, an identifier of the first device (110), and a reason associated with the unavailability information; and
sending the unavailability information to a second device (120) in a predetermined frame structure.

2. The method according to claim 1, wherein sending comprises:
sending the unavailability information to via a target wake time element comprises at least a point-to-point target wake time element and a broadcast target wake time element;wherein the reason associated with the unavailability information comprises: at least one of:
the first device (110) being scheduled to communicate on another predetermined frequency band with other devices different from the second device (120) and a third device (130) during the predetermined time period;
the first device (110) being in a tunneled direct link mode during the predetermined time period; or
the first device (110) performing channel measurement during the predetermined time period;wherein the unavailability information further comprises information associated with the channel measurement, comprising:
channel measurement type;
channel measurement mode;
measurement start time;
channel measurement duration;
channel measurement information parameters;
channel measurement operation category;
number of measured channels; and
bandwidth indication.

3. The method according to claim 1, further comprising:
receiving a buffer status report polling initial control frame from the second device (120) within a transmission opportunity of the second device (120); and
responding to determination that the buffer status report polling initial control frame indicates a request for the unavailability information, sending the unavailability information to the second device (120) in the transmission opportunity via a multi-station block acknowledgement frame in a periodic or non-periodic manner; or
sending the unavailability information to the second device (120) within a transmission opportunity of the first device (110) via the buffer status report polling initial control frame and/or a multi-user request to send frame.

4. The method according to any one of claims 1 to 3, wherein the unavailability information indicates partial service unavailability of the first device (110) during the predetermined time period, and wherein the unavailability information further comprises:
available channels of the first device (110);
available bandwidth of the first device (110);
number of available spatial streams of the first device (110); and
available transmission power of the first device (110); and/or at least one of:
an identifier of the second device (120);
target start time of the predetermined time period;
length of the predetermined time period;
description information associated with the unavailability reason; or
information associated with a link.

5. A method for communication comprising:
receiving unavailability information of a first device (110) from the first device (110) in a predetermined frame structure by a second device (120), wherein the unavailability information comprises at least an indication that the first device (110) is unavailable for communication on a predetermined frequency band during a predetermined time period, an identifier of the first device (110), and a reason associated with the unavailability information; and
sending the unavailability information to at least one third device (130) in response to receiving the unavailability information from the first device (110).

6. The method according to claim 5, further comprising:
receiving the target wake time element including the unavailability information from the first device (110), wherein the target wake time element comprises at least a point-to-point target wake time element and a broadcast target wake time element; and
sending the unavailability information to the at least one third device (130) via management frames and/or control frames, wherein the management frames comprise beacon frames and the control frames comprise multi-user request to send frames and buffer status report polling initial control frames; or
receiving the unavailability information from the first device (110) in the predetermined frame structure comprises:
sending a buffer status report polling initial control frame to the first device (110) within a transmission opportunity of the second device (120), wherein the buffer status report polling initial control frame indicates a request for the unavailability information; and
receiving the unavailability information from the first device (110) via a multi-station block acknowledgement frame in the transmission opportunity of the second device (120) in a periodic or non-periodic manner.

7. The method according to claim 6, wherein the reason associated with the unavailability information comprises:
the first device (110) being scheduled to communicate on another predetermined frequency band with other devices different from the second device (120) and the at least one third device (130) during the predetermined time period;
the first device (110) being in a tunneled direct link mode during the predetermined time period; or
the first device (110) performing channel measurement during the predetermined time period;
wherein the reason comprises performing channel measurement, and wherein the unavailability information further comprises information associated with the channel measurement, comprising:
channel measurement type;
channel measurement mode;
measurement start time;
channel measurement duration;
channel measurement information parameters;
channel measurement operation category;
number of measured channels; and
bandwidth indication.

8. The method according to claim 6, wherein receiving the unavailability information from the first device (110) in the predetermined frame structure comprises:
receiving the unavailability information from the first device (110) via the buffer status report polling initial control frame and/or multi-user request to send frames within a transmission opportunity of the first device (110).

9. The method according to claim 8, wherein sending the unavailability information to the at least one third device (130) further comprises:
sending the unavailability information to the at least one third device (130) via management frames and/or control frames, wherein the management frames comprise beacon frames and the control frames comprise multi-user request to send frames and buffer status report polling initial control frames;or
sending the unavailability information to the at least one third device (130) based on identifier caching functionality.

10. The method according to any one of claims 5 to 9, wherein the unavailability information indicates partial service unavailability of the first device (110) during a partial service period of the first device (110), and wherein the unavailability information further comprises:
available channels of the first device (110);
available bandwidth of the first device (110);
number of available spatial streams of the first device (110); and
available transmission power of the first device (110);and/or at least one of:
an identifier of the second device (120);
target start time of the predetermined time period;
length of the predetermined time period;
description information associated with the unavailability reason; or
information associated with a link.

11. A method for communication comprising:
receiving unavailability information of a first device (110) from a second device (120) in a predetermined frame structure by a third device (130), wherein the unavailability information comprises at least an indication that the first device (110) is unavailable for communication on a predetermined frequency band during a predetermined time period, an identifier of the first device (110), and a reason associated with the unavailability information; and
performing channel transmission with the first device (110) outside the predetermined time period based on the unavailability information.

12. The method according to claim 11, wherein receiving the unavailability information from the second device (120) comprises:
receiving the unavailability information via management frames and/or control frames from the second device (120), wherein the management frames comprise beacon frames and the control frames comprise multi-user request to send frames and buffer status report polling initial control frames; or
receiving the unavailability information based on identifier caching functionality from the second device (120);
receiving the unavailability information based on identifier caching functionality from the second device (120).
or the reason associated with the unavailability information comprises:
the first device (110) being scheduled to communicate on another predetermined frequency band with other devices different from the second device (120) and the third device (130) during the predetermined time period;
the first device (110) being in a tunneled direct link mode during the predetermined time period; or
the first device (110) performing channel measurement during the predetermined time period and wherein the reason comprises performing channel measurement, and wherein the unavailability information further comprises information associated with the channel measurement, comprising:
channel measurement type;
channel measurement mode;
measurement start time;
channel measurement duration;
channel measurement information parameters;
channel measurement operation category;
number of measured channels; and
bandwidth indication.

13. The method according to any one of claims 11 to 12, wherein the unavailability information indicates partial service unavailability of the first device (110) during a partial service period of the first device (110), and wherein the unavailability information further comprises:
available channels of the first device (110);
available bandwidth of the first device (110);
number of available spatial streams of the first device (110); and
available transmission power of the first device (110);and/or at least one of:
an identifier of the second device (120);
target start time of the predetermined time period;
length of the predetermined time period;
description information associated with the unavailability reason; or
information associated with a link.

14. The method according to any one of claims 11 to 13, further comprising:
exchanging capability negotiation information via beacon frames with the second device (120), wherein the capability negotiation information indicates that the second device (120) and the at least one third device (130) have capability to share unavailability information; or
receiving unavailability information of the second device (120) from the second device (120), wherein the unavailability information of the second device (120) comprises at least an indication that the second device (120) is unavailable for communication on a predetermined frequency band during another predetermined time period.

15. The method according to any one of claims 1 to 4, or any one of the methods according to claims 5 to 10, or any one of the methods according to claims 11 to 15 wherein the first device comprises a terminal device, the second device comprises a network device for Wi-Fi communication, the third device (130) comprises a terminal device or a network device for Wi-Fi communication, and wherein the first device, the second device and the third device comprise multi-link operation supporting devices.

16. A device for communication comprising:
at least one processor (1210); and
at least one memory (1220) coupled to the at least one processor, the at least one memory having stored therein instructions configured to cause the device, when executed by the at least one processor (1210), to perform any one of the methods according to claims 1-4, or any one of the methods according to claims 5 to 10, or any one of the methods according to claims 11 to 15.

17. A computer-readable storage medium (1230) having stored thereon a computer program comprising instructions which, when executed by a processor of an apparatus, cause the apparatus to perform any one of the methods according to claims 1-4, or any one of the methods according to claims 5 to 10, or any one of the methods according to claims 11 to 15.
